# FASCICULE DE BREVET EUROPEEN

(11) **EP 2 261 556 B1**
(45) Date de publication et mention de la délivrance du brevet: **02.08.2017**
(21) Numéro de dépôt: 10164885.5
(22) Date de dépôt: 03.06.2010
(51) Int. Cl.: F21S 8/12, B60Q 1/08, B60Q 1/076

(54) **Dispositifs d'éclairage, notamment à diodes électroluminescentes, aptes à générer un faisceau lumineux adaptatif**
Beleuchtungsvorrichtungen, insbesondere mit Leuchtdioden, die ein adaptative Lichbündel erzeugen können
Lighting device, in particular with light-emitting diodes, suitable for generating an adaptive light beam

(30) Priorité: 10.06.2009 FR 0953827
(43) Date de publication de la demande: 15.12.2010
(73) Titulaire: VALEO VISION, 93012 Bobigny (FR)
(72) Inventeur: Albou, Pierre, 75013, PARIS (FR); Blandin, Jonathan, 93320, LES PAVILLONS SOUS BOIS (FR); Sanchez, Vanesa, 75011, PARIS (FR)

(56) Documents cités:
- EP-A1- 1 935 715
- EP-A1- 2 039 567
- EP-A1- 2 060 441
- EP-A2- 1 500 867
- EP-A2- 2 060 442
- WO-A-2008/037388
- WO-A1-2008/155342
- WO-A1-2009/039882

## Description

La présente invention a pour objet un ensemble de dispositifs d'éclairage à diodes électroluminescentes, dont l'acronyme est DELs ou LEDs, apte à générer un faisceau lumineux adaptatif. Un dispositif d'éclairage est, d'une manière générale, un ensemble optique apte à générer un faisceau lumineux, à partir d'un module optique ou de plusieurs modules optiques, et destiné à être intégré dans un dispositif projecteur.

Le domaine de l'invention est, d'une façon générale, celui des projecteurs de véhicule automobile. Dans ce domaine, on connaît différents types de projecteurs classiques, parmi lesquels on trouve essentiellement :
- des feux de position, d'intensité et de portée faible ;
- des feux de croisement, ou codes, d'intensité plus forte et de portée sur la route avoisinant 80 mètres, qui sont utilisés essentiellement la nuit et dont la répartition du faisceau lumineux est telle qu'elle permet de ne pas éblouir le conducteur d'un véhicule croisé ; les faisceaux lumineux de type code diffèrent avec le type de circulation, à gauche ou à droite, dans laquelle ils sont utilisés ;
- des feux de route longue portée, dont la zone de vision sur la route avoisine 600 mètres, et qui doivent être éteints lorsque l'on croise un autre véhicule afin de ne pas éblouir son conducteur ;
- des feux anti-brouillard...
- un type de projecteurs perfectionnés, cumulant les fonctions de feux de croisement et de feux longue portée, appelés projecteurs bifonctions.

Les dispositifs d'éclairage classiques qui viennent d'être évoqués, plus particulièrement ceux qui sont utilisés comme feux de croisement, produisent des faisceaux lumineux qui sont perfectibles lors de leur utilisation dans certaines conditions. Ainsi, par exemple, lorsqu'un véhicule aborde un virage, les projecteurs continuent à éclairer droit devant eux alors qu'il serait plus judicieux d'orienter le faisceau lumineux dans la direction du virage emprunté. C'est pourquoi, en complément des fonctions projecteurs principales classiques, notamment codes et routes, différents perfectionnements sont progressivement apparus.

On a ainsi vu se développer des fonctions élaborées, dites fonctions avancées, ou AFS (Advanced Front lighting System en anglais pour système avancé d'éclairage frontal), parmi lesquelles on trouve notamment, directement concernée par l'invention, une fonction dite DBL (Dynamic Bending Light en anglais pour lumière virage mobile, appelée code virage en langue française), qui réalise un projecteur orientable, appelé aussi dispositif d'éclairage à faisceau mobile : un tel dispositif d'éclairage est apte à modifier l'orientation d'un faisceau lumineux produit par un dispositif d'éclairage, de telle sorte que lorsque le véhicule aborde un virage, la route est éclairée de façon optimale, en suivant la géométrie de la route.

Pour réaliser une telle fonction, une technique connue consiste à rendre mobile le faisceau global du dispositif d'éclairage grâce à un actionneur contrôlant le pivotement, au moins partiel, du dispositif d'éclairage en fonction d'une information provenant du véhicule, par exemple par l'intermédiaire d'un capteur d'angle volant. Le document EP 1 935 715 décrit un tel dispositif d'éclairage, selon le préambule de la revendication 1. Pour l'ensemble des projecteurs et feux qui viennent d'être mentionnés, traditionnellement, on utilise des sources lumineuses de type lampes halogènes, ou lampes à décharge. Mais depuis quelques années, les équipementiers automobiles ont proposé l'utilisation de diodes électroluminescentes, également appelées DELs ; cette utilisation concerne par exemple les feux de signalisation ou les feux arrières.

Les diodes électroluminescentes présentent un certain nombre d'avantages. Tout d'abord, depuis longtemps, on sait que ce type de diodes ne rayonne pas de façon omnidirectionnelle, mais rayonne dans un demi espace opposé à un substrat qui supporte la jonction P-N de la diode considérée ; ainsi, en utilisant un rayonnement plus directif, la quantité d'énergie perdue est moins importante qu'avec des lampes à décharges ou halogènes. Ensuite, on a récemment perfectionné ces diodes en terme d'intensité de puissance de rayonnement. De plus, les diodes fabriquées émettent un rayonnement depuis longtemps dans le rouge, mais désormais également notamment dans le blanc et l'orange, ce qui accroît le champ de leurs utilisations envisageables. La quantité de chaleur qu'elles dégagent est relativement limitée, et un certain nombre de contraintes, liées à la dissipation de chaleur demeure cependant importante pour les DELs de puissance. Enfin, les DELs consomment moins d'énergie, même à intensité de rayonnement égal, que les lampes à décharge ou les lampes halogènes ; elles sont peu encombrantes, et leur forme particulière offre des possibilités nouvelles pour la réalisation et la disposition des surfaces complexes qui leur sont associées, notamment en les disposant sur des supports électroniques de type support électronique flexible.

Par ailleurs, dans le but général d'améliorer le confort de conduite en terme de visibilité, les dispositifs projecteurs bifonctions sont utilisés ; dans les modules optiques bifonctions de ces dispositifs projecteurs, la commutation de la fonction code à la fonction route, et vice-versa, est automatique, ladite commutation dépendant des conditions de circulation. Avec des véhicules équipés de tels modules bifonctions, on procède à la recherche de la présence d'un véhicule susceptible d'être ébloui par une utilisation de la fonction route. Si aucun véhicule n'est détecté, la fonction route est automatiquement activée. Dès que la présence d'un véhicule est détectée, la fonction route est automatiquement désactivée, et le véhicule équipé du projecteur bifonctions présente de nouveau un faisceau lumineux de type code.

Dans la pratique, la valeur seuil à partir de laquelle l'absence de véhicule détecté autorise la commutation vers la fonction route est approximativement de 600 mètres. Dès qu'un véhicule est détecté à moins de 600 mètres du véhicule équipé, c'est la fonction code qui est activée. Or cette fonction n'assure un éclairage satisfaisant que sur une distance avoisinant 80 mètres au niveau de la partie centrale de la route, et de 150 mètres sur le bas-côtés de la voie ou circule le véhicule (soit le bas-côté droit dans le cadre d'un trafic à droite) ; l'éclairage réalisé étant ainsi essentiellement sur la droite de la route dans le cas d'une circulation à droite, le côté gauche de la chaussée étant nettement moins éclairé. Il existe donc de nombreuses configurations de circulation, celles dans lesquelles le premier véhicule susceptible d'être ébloui est situé à plus d'une centaine de mètres et à moins de 600 mètres du véhicule équipé, pour lesquelles l'éclairage de la route pourrait être optimisé sans pour autant éblouir le conducteur d'un quelconque autre véhicule.

On a donc proposé, différentes solutions permettant d'adapter la portée du faisceau en fonction d'une distance estimée à laquelle se situe le véhicule croisé ou suivi. On parle alors de faisceaux lumineux progressifs. Si ces solutions sont satisfaisantes en terme d'optimisation de la portée du faisceau lumineux, elles ne le sont pas si on considère l'éclairage latéral de la route qui est proposé.

On a donc également proposé, dans l'état de la technique, des solutions pour découper un faisceau lumineux global émis par un véhicule en différentes portions angulaires adjacentes, chaque portion correspondant à un secteur angulaire du faisceau global. Ainsi, si le véhicule croisé ou suivi est présent dans une portion considérée, un faisceau lumineux global optimisé consisterait à rendre non éblouissante uniquement la portion considérée du faisceau lumineux global. On parle alors de faisceaux lumineux sélectifs. Par portion non éblouissante, on désigne un secteur angulaire du faisceau lumineux global dans lequel le faisceau est concentré uniquement sous la ligne d'horizon, lorsqu'il atteint, ou avant d'atteindre, le véhicule suivi ou croisé.

Cependant, les solutions proposées dans l'état de la technique pour réaliser des faisceaux lumineux sélectifs, dans des dispositifs d'éclairage également aptes à générer un faisceau lumineux de type code utilisent tous des solutions mécaniques dans lesquelles des caches mobiles, produisant des lignes de coupure variables en fonction de leur positionnement. De tels mécanismes, qui sont fréquemment sollicités, rencontrent des problèmes de fiabilité, notamment sur la durée de vie du dispositif d'éclairage.

C'est un but de l'invention d'améliorer la fiabilité des dispositifs d'éclairages générant des faisceaux avec des lignes de coupures variables.

Selon l'objet de la présente invention, on propose, à partir de dispositifs d'éclairage offrant une fonctionnalité DBL et équipés de DELs, un ensemble de dispositifs d'éclairage aptes à produire, en fonction des conditions de circulation, un faisceau lumineux sélectif performant, qui s'affranchit de la présence d'un système de caches présentant des riques de fiabilités et encombrants. Avantageusement, on propose également, dans un mode de réalisation particulier de l'invention, de rendre progressif le faisceau lumineux sélectif généré. A cet effet, on propose notamment de disposer sur la partie mobile d'au moins un des dispositifs d'éclairage constituant l'ensemble de dispositifs d'éclairage selon l'invention, au moins une première source lumineuse de type DEL et une deuxième source lumineuse de type DEL aptes à réaliser chacune un faisceau élémentaire particulier présentant une ligne de coupure particulière, la réunion des différents faisceaux élémentaires produits permettant l'obtention d'un faisceau sélectif à partir de dispositifs d'éclairage simplifiés en terme d'encombrement mécanique.

L'invention concerne plus particulièrement un dispositif d'éclairage comportant un support de module optique apte à évoluer en rotation autour d'un axe sensiblement vertical, le dispositif d'éclairage comprenant:
- un premier module optique apte à réaliser un faisceau lumineux présentant une coupure de type code ;
- un deuxième module optique apte à générer un faisceau lumineux présentant une ligne de coupure sensiblement en forme de "L", avec une première partie sensiblement horizontale, qui s'interrompt par une remontée comprise entre 45 degrés et 135 degrés par rapport à la partie sensiblement horizontale de la ligne de coupure considérée, la partie horizontale de la ligne de coupure considérée s'étendant soit vers la droite, soit vers la gauche de ladite remontée;
le premier module optique et le deuxième module optique étant disposés sur le support de module optique apte à évoluer en rotation.

Ce mode de réalisation permet de s'affranchir des caches mobiles pour réaliser un dispositif d'éclairage générant à la fois un faisceau comprenant une coupure de type code et un faisceau avec une coupure en « L », coupure en « L » pouvant être destinée à être utilisée dans le cadre d'un faisceau sélectif. Ainsi ces dispositifs d'éclairage seront plus fiables. De plus, comme les caches mobiles présentent un encombrement important, compliquant la fabrication du dispositif d'éclairage considéré. Les dispositifs selon la présente invention présentent donc un coût moins élevé.

Le dispositifs d'éclairage selon l'invention peut également présenter, outre les caractéristiques principales énoncées dans le paragraphe précédent, une ou plusieurs des caractéristiques complémentaires suivantes ; toute combinaison de ces caractéristiques complémentaires, dans la mesure où elles ne s'excluent pas mutuellement, constitue un exemple avantageux de réalisation de l'invention:
- le dispositif d'éclairage selon la présente invention comprend un troisième module optique apte à réaliser un faisceau lumineux à coupure plate ;
- le premier module optique, le deuxième module optique et/ou le troisième module optique comprennent au moins une source lumineuse de type diode électroluminescente ;
- le premier module optique comprend une unique diode électroluminescente ;
- le deuxième module optique comprend une unique diode électroluminescente ;
- le troisième module optique apte à réaliser un faisceau lumineux à coupure plate comprend une unique diode électroluminescente ;
- le troisième module optique apte à réaliser un faisceau lumineux à coupure plate comprend au moins deux diodes électroluminescentes.

La présente invention se rapporte aussi à un ensemble de dispositifs d'éclairage selon la présente invention. Préférentiellement, cet ensemble de dispositifs d'éclairage peut également présenter une ou plusieurs des caractéristiques complémentaires suivantes ; toute combinaison de ces caractéristiques complémentaires, dans la mesure où elles ne s'excluent pas mutuellement, constitue un exemple avantageux de réalisation de l'invention:
- cet ensemble est constitué d'un premier dispositif d'éclairage et d'un deuxième dispositif d'éclairage, qui sont des dispositifs d'éclairage selon la présente invention, le deuxième module optique du premier dispositif d'éclairage présentant une ligne de coupure sensiblement en forme de "L" dont la partie horizontale s'étend vers la droite, et le deuxième module optique du deuxième dispositif d'éclairage présentant une ligne de coupure sensiblement en forme de "L" dont la partie horizontale s'étend vers la gauche.
- le premier dispositif d'éclairage est un premier projecteur pour véhicule automobile et le deuxième dispositif d'éclairage est un deuxième projecteur pour véhicule automobile.

La présente invention se rapporte aussi à un procédé d'adaptation automatique d'un faisceau lumineux produit par un ensemble de dispositifs d'éclairage selon la présente invention, d'un premier véhicule automobile circulant sur une route, ce procédé comprenant les étapes de :
- détection de la présence d'au moins un deuxième véhicule, suivi ou croisé, à ne pas éblouir ;
- le cas échéant, détermination d'une position du deuxième véhicule sur la route ;
le procédé comprenant les différentes étapes supplémentaires de:
- génération d'un faisceau lumineux sélectif au moyen du deuxième module optique du premier dispositif d'éclairage et du deuxième module optique du deuxième dispositif d'éclairage, le module optique du premier dispositif d'éclairage générant un faisceau lumineux présentant une ligne de coupure sensiblement en forme de "L", dont la partie horizontale s'étend vers la droite, et le module optique du deuxième dispositif d'éclairage générant un faisceau lumineux présentant une ligne de coupure sensiblement en forme de "L", dont la partie horizontale s'étend vers la gauche, de manière à ce que l'écart entre les deux remontées verticales des lignes de coupure de ces deux faisceaux lumineux crée une zone d'ombre dans le faisceau sélectif;
- de positionnement de la zone d'ombre au niveau de la position du deuxième véhicule.

Ce procédé peut également présenter, outre les caractéristiques principales énoncées dans le paragraphe précédent, une ou plusieurs des caractéristiques complémentaires suivantes ; toute combinaison de ces caractéristiques complémentaires, dans la mesure où elles ne s'excluent pas mutuellement, constitue un exemple avantageux de réalisation de l'invention:
- il comprend une étape supplémentaire de superposition au faisceau lumineux sélectif un faisceau lumineux de type code, généré par le premier module optique du deuxième dispositif d'éclairage, sur une route de trafic à droite, ou du premier dispositif d'éclairage, sur une route de trafic à gauche.
- le faisceau lumineux de type code est généré par une diode électroluminescente dont la valeur de l'intensité est déterminée par au moins un paramètre, ledit paramètre étant :
   - une information de température dudit premier module optique et/ou du deuxième module optique ; et/ou
   - une information de correction de portée.

La présente invention se rapporte également à un véhicule automobile comprenant l'ensemble de dispositifs d'éclairage selon l'invention.

L'invention et ses différentes applications seront mieux comprises à la lecture de la description qui suit et à l'examen des figures qui l'accompagnent.

Celles-ci ne sont présentées qu'à titre indicatif et nullement limitatif de l'invention.
- à la figure 1, différents exemples de faisceaux lumineux produits par l'ensemble de dispositifs selon l'invention ;
- à la figure 2, une représentation schématique, en coupe, d'un exemple de module optique selon l'invention ;
- à la figure 3, une représentation schématique, en perspective, d'un exemple de module optique selon l'invention ;
- à la figure 4, une représentation partielle d'un des dispositifs d'éclairage apte à être utilisé dans un exemple de réalisation de l'ensemble de dispositifs d'éclairage selon l'invention ;
- à la figure 5, on a représenté différentes combinaisons de faisceaux lumineux susceptibles d'intervenir dans les ensembles de dispositifs d'éclairage selon l'invention.

Les éléments apparaissant sur différentes figures conservent, sauf précision contraire, les mêmes références. Les différentes désignations de position, par exemple "en-dessous", "au-dessus", "vertical", "supérieur", "inférieur"... doivent être considérées dans des conditions normales de circulation sur route, ou d'utilisation de l'ensemble de dispositifs d'éclairage selon l'invention, lorsque celui-ci est installé pour fonctionner sur un véhicule automobile. L'objet de l'invention est décrit pour un ensemble de dispositifs d'éclairage équipant un véhicule adapté aux conditions de trafic à droite. L'objet de l'invention est bien évidemment transposable sans difficulté à des conditions de trafic à gauche.

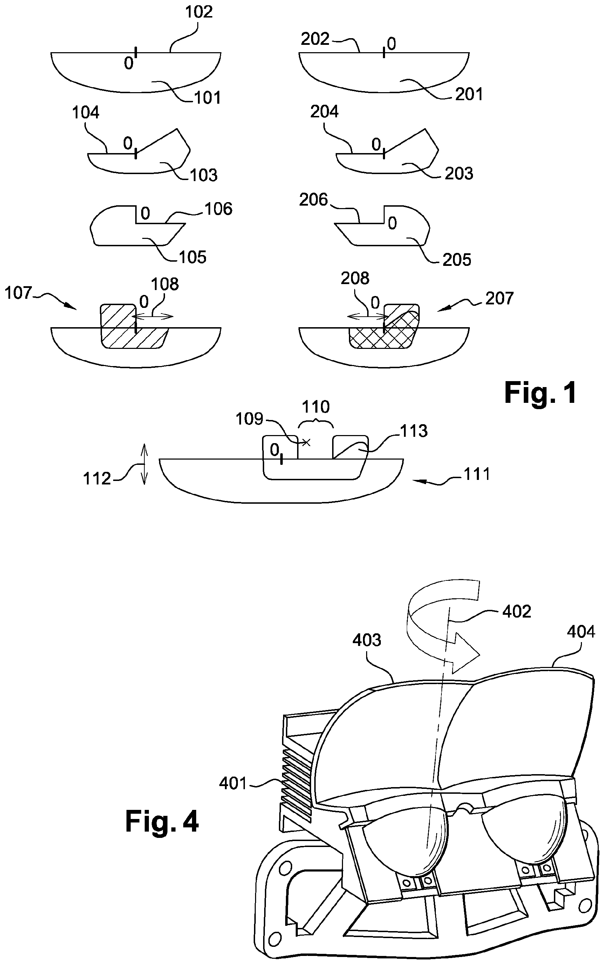

Sur la figure 1, on a représenté différents exemples de faisceaux lumineux susceptibles d'être produits par un premier dispositif d'éclairage et un deuxième dispositif d'éclairage de l'ensemble selon l'invention.

Ainsi, le premier dispositif d'éclairage, qui est ici un dispositif d'éclairage avant gauche, génère :
- un premier faisceau lumineux élémentaire 103, présentant une ligne de coupure 104 correspondant à un code classique pour une conduite à droite ;
- un deuxième faisceau lumineux élémentaire 105, présentant une ligne de coupure 106 en forme de "L" ;
- un troisième faisceau lumineux élémentaire 101, présentant une ligne de coupure plate 102.

La superposition du premier et du deuxième faisceaux élémentaires qui viennent d'être cités donne un faisceau lumineux gauche 107.

De la même manière, le deuxième dispositif d'éclairage, qui est ici un dispositif d'éclairage avant droit, génère :
- un premier faisceau lumineux élémentaire 203, présentant une ligne de coupure 204 correspondant à un code classique pour une conduite à droite ;
- un deuxième faisceau lumineux élémentaire 205, présentant une ligne de coupure 206 en forme de "L" ;
- un troisième faisceau lumineux élémentaire 201, présentant une ligne de coupure plate 202 ;

La superposition des trois faisceaux élémentaires qui viennent d'être cités donne un faisceau lumineux droit 207.

Par ligne de coupure en forme de "L", on désigne une ligne de coupure avec une première partie sensiblement horizontale, qui s'interrompt par une remontée sensiblement verticale, c'est-à-dire comprise entre 45 degrés et 135 degrés, de la ligne de coupure considérée, la partie horizontale de la ligne de coupure considérée s'étendant soit vers la droite, soit vers la gauche de ladite remontée sensiblement verticale. Ainsi, les lignes de coupure 106 et 206 précitées peuvent être, dans un exemple particulier, symétriques l'une de l'autre. Dans d'autres exemples de réalisation, elles ne sont pas symétriques l'une de l'autre. Dans l'exemple illustré, le deuxième faisceau lumineux élémentaire 105 du dispositif d'éclairage gauche, présente une coupure en forme de « L » dont la partie horizontale est vers la droite dans le faisceau élémentaire 105, alors que le deuxième faisceau lumineux élémentaire 205 du dispositif d'éclairage droit, présente une coupure en forme de « L » dont la partie horizontale est vers la gauche dans le faisceau élémentaire 205

Sur les différents faisceaux lumineux représentés, on repère l'axe optique du module optique produisant le faisceau élémentaire considéré par la référence O. Les différents faisceaux lumineux qui viennent d'être mentionnés sont avantageusement produits par des modules optiques distincts disposés au sein de chacun des deux dispositifs d'éclairage considérés, le nième faisceau élémentaire étant produit par un nième module optique. Par module optique, on désigne dans la présente demande un système optique comprenant au moins une source lumineuse, éventuellement disposée dans un réflecteur, parfois à surface complexe, et éventuellement associée à un ou plusieurs éléments dioptriques du type réflecteur ou du type face de lentille.

Selon une caractéristique essentielle de l'invention, comme illustré à la figure 4, on prévoit de monter, au sein d'au moins un des deux dispositifs d'éclairage de l'ensemble selon l'invention, le premier module optique, référencé 403, et le deuxième module optique, référencé 404, sur un support 401 apte à évoluer en rotation autour d'un axe de rotation 402 sensiblement vertical. Ainsi, les premier et deuxième faisceaux lumineux élémentaires sont susceptibles, du fait de la rotation du support 401 autour de l'axe 402, de se déplacer sensiblement horizontalement, comme illustré par une première flèche 108 et par une deuxième flèche 208 visibles sur la figure 1. Dans un mode de réalisation avantageux, les premier et deuxième modules optiques sont montés sur un tel support dans le premier dispositif d'éclairage et dans le deuxième dispositif d'éclairage.

L'activation des deuxièmes modules optiques des deux dispositifs d'éclairage permet de réaliser un faisceau lumineux sélectif : une fois la position d'un véhicule croisé ou suivi 109 déterminée par des techniques connues, faisant par exemple notamment intervenir une caméra et des algorithmes de traitement d'image, le support 401 entre en rotation de manière à ne laisser, dans un faisceau lumineux global 111 un espace non éclairé au-dessus de la ligne d'horizon qu'au niveau d'une portion angulaire 110 contenant ledit véhicule 109.

Selon une variante de réalisation, l'activation, ,d'un des premiers modules optiques permet de réaliser avantageusement un faisceau lumineux progressif, en renforçant l'intensité lumineuse au niveau d'une certaine zone 113 du faisceau lumineux global 111, ladite zone correspondant à l'empreinte lumineuse du faisceau lumineux élémentaire 203 correspondant au code classique. Dans l'exemple illustré en figure 1, le véhicule équipé des dispositifs selon la présente invention circule à droite. Par conséquent, dans le dispositif d'éclairage situé à droite le premier module est allumé en même temps que le deuxième module et le premier module génère un premier faisceau lumineux élémentaire 203, présentant une ligne de coupure 204 correspondant à un code classique pour une conduite à droite, qui en se superposant au deuxième faisceau élémentaire 205 vient renforcer l'éclairage dans la partie située à droite de la partie horizontale de la coupure du premier faisceau élémentaire 205, renforçant ainsi l'éclairage sur les bas-côté et à droite du véhicule détecté. En revanche, le premier module du dispositif d'éclairage gauche est éteint et le deuxième module est allumé.

Dans un exemple avantageux, la diode électroluminescente du troisième module optique est allumée progressivement, en fonction d'une loi de commande préalablement déterminée. Ainsi, par exemple, pour déterminer l'intensité lumineuse de ladite diode, la loi de commande prend en considération au moins un des paramètres suivants pour déterminer l'intensité lumineuse de ladite diode :
- une information de température du module optique dans lequel est disposée la dite diode ; l'intensité de la diode peut ainsi par exemple être diminuée si on détecte une température trop importante, proche de la limite acceptable pour le fonctionnement de la diode, afin de faire baisser ladite température ;
- une information de correction de portée : en déterminant la position d'un véhicule suivi ou croisé, on peut utiliser la correction de portée pour surélever le faisceau lumineux produit par l'ensemble de dispositifs d'éclairage selon l'invention ; l'intensité de la diode considérée peut avantageusement varier en fonction de l'information de correction portée relevée, plus la correction de portée étant importante, plus l'intensité de la diode considérée étant élevée.

Dans un mode de réalisation avantageux, afin d'améliorer le caractère progressif du faisceau lumineux global, on utilise des moyens de déplacement verticaux 112 du faisceau lumineux global 111. Ces moyens peuvent consister en tout mécanisme permettant de faire évoluer verticalement ledit faisceau lumineux global, notamment le mécanisme de correction d'assiette, ou correction de portée.

Avantageusement, dans l'invention, les sources lumineuses utilisées sont de type DELs. On dispose ainsi, par rapport aux sources lumineuses de type lampes à décharge, d'une grande amplitude dans la variation de l'intensité de chaque faisceau lumineux élémentaire produit par un module optique comportant au moins une led, et notamment des deuxième et troisième faisceaux lumineux élémentaires. La variation de l'intensité lumineuse ainsi produite par chaque module optique augmente les performances en terme de progressivité du faisceau lumineux ainsi généré.

Dans les exemples illustrés en figure 1, il est également possible d'obtenir au moyen du dispositif un faisceau de type code classique en éteignant les deuxièmes modules et en allumant les premiers. Avec les dispositifs d'éclairage illustrés en figure 1, le faisceau code serait obtenu, par superposition du premier faisceau élémentaire 103 et du troisième faisceau élémentaire 101, pour le dispositif d'éclairage gauche, et par superposition du premier faisceau élémentaire 203 et du troisième faisceau élémentaire 201, pour le dispositif d'éclairage droit. Le faisceau code généré par l'ensemble des dispositifs d'éclairage du véhicule résultera de la fusion de ces quatre faisceaux élémentaires 101, 103, 201 et 203.

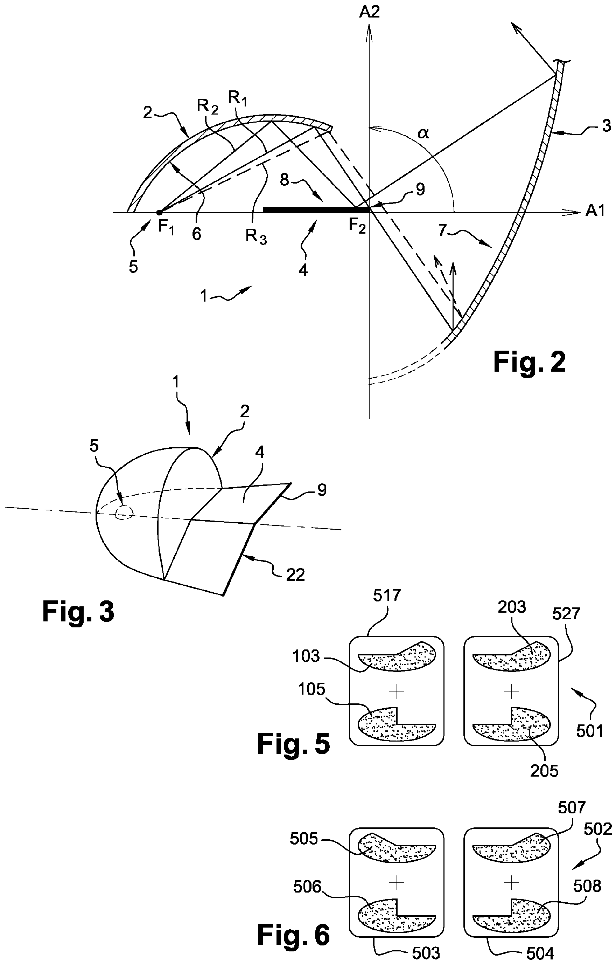

Dans un exemple avantageux de réalisation du système selon l'invention, notamment en termes d'encombrement et de coût de fabrication, les modules optiques utilisés sont conformes au module optique 1 représenté aux figures 2 et 3.

Le module optique 1 comporte :
- un premier réflecteur 2,
- un deuxième réflecteur 3,
- un troisième réflecteur 4,
- une source lumineuse 5.

Le premier réflecteur 2 est un réflecteur du type elliptique possédant :
- deux foyers F1 et F2,
- un axe optique A1,
- une surface réfléchissante 6 sensiblement elliptique.

La surface sensiblement elliptique 6 est réalisée sous la forme d'un secteur angulaire de pièce sensiblement de révolution et qui s'étend dans le demi-espace situé au-dessus d'un plan axial perpendiculaire au plan de la feuille et contenant l'axe optique A1. En première approximation, la surface 6 est une demie ellipsoïde.

On peut cependant noter que la surface 6 peut ne pas être parfaitement elliptique et avoir plusieurs profils spécifiques prévus pour optimiser la répartition lumineuse dans le faisceau d'éclairage produit par le module 1. Ceci implique que le premier réflecteur 2 ne soit pas parfaitement de révolution.

La source lumineuse 5 se trouve agencée sensiblement au premier foyer F1 du premier réflecteur 2.

Comme précisé précédemment, avantageusement, la source lumineuse 5 est une diode électroluminescente qui émet la majorité de son énergie lumineuse vers la face interne réfléchissante de la surface sensiblement elliptique 6.

Le deuxième réflecteur 3 comporte :
- un foyer sensiblement confondu avec le second foyer F2 du premier réflecteur 2,
- un axe optique A2,
- une surface réfléchissante 7.

L'axe optique A2 est sensiblement parallèle à l'axe longitudinal d'un véhicule non représenté et équipé du module d'éclairage 1.

L'axe optique A1 forme un angle α avec l'axe optique A2. Dans l'exemple représenté, l'angle α est égal à 90° ; d'autres exemples de réalisation, avec une autre valeur de cet angle, sont cependant possible.

Selon un premier mode de réalisation, la surface réfléchissante 7 est de forme sensiblement paraboloïdale, l'axe de la parabole étant l'axe optique A2.

Le troisième réflecteur 4, appelé plieuse, se situe entre le premier réflecteur 2 et le deuxième réflecteur 3 et comporte au moins une face supérieure 8 réfléchissante et un bord d'extrémité avant 9, dit bord de coupure.

Le bord de coupure 9 est agencé au voisinage du second foyer F2 du premier réflecteur 2.

Le principe de fonctionnement du module optique 1 est le suivant :
Nous considérerons pour cela trois rayons lumineux R1, R2 et R3 issus de la source lumineuse 5.

Comme la source lumineuse 5 est agencée au premier foyer F1 du premier réflecteur 2, la majeure partie des rayons émis par la source 5, après s'être réfléchie sur la face interne 6, est renvoyée vers le second foyer F2 ou au voisinage de celui-ci. C'est le cas du rayon R1 qui passe le long du bord de coupure 9. R1 se réfléchit ensuite sur la surface 7 du deuxième réflecteur 3 selon une direction sensiblement parallèle à l'axe optique A2 du deuxième réflecteur 3.

Cependant, d'autres rayons peuvent, après s'être réfléchi sur la face interne 6, se réfléchir sur la surface 8 de la plieuse 4 ; c'est le cas de R2. R2 va ensuite se réfléchir à nouveau sur la surface 7 paraboloïdale et cette réflexion se fera vers la gauche dans le plan de la figure 1. Le rayon R2 est donc émis sous la coupure dans le faisceau d'éclairage. Sans la réflexion de R2 sur la surface 8, le rayon R2 aurait été inacceptable (car au-dessus de la coupure).

D'autres rayons, du type de R3, peuvent passer au-dessus du bord 9. Dans un tel cas, le rayon R3 est également émis sous la coupure dans le faisceau d'éclairage.

Un avantage du module optique 1 est ainsi qu'il n'occulte pas une partie importante des rayons lumineux émis par la source 5, comme c'est le cas dans un module d'éclairage classique comportant un cache.

La surface réfléchissante 8 permet de « replier » les images de la source lumineuse 5 qui sont réfléchies par la surface elliptique 6 du premier réflecteur 2 au second foyer F2.

Le « pli » formé par ce « repliement » d'images contribue à former une coupure nette dans le faisceau d'éclairage réfléchi par le deuxième réflecteur 3.

L'angle α est choisi et optimisé en utilisant la propriété des diodes de n'émettre que dans un demi-espace de sorte que le premier réflecteur 2 n'intercepte pas une partie du flux réfléchi par le deuxième réflecteur 3. L'angle α choisi ici est égal à 90° mais cet angle peut également être supérieur à 90° afin d'obtenir un module plus compact tout en permettant au premier réflecteur 2 de ne pas intercepter une partie du flux réfléchi par le deuxième réflecteur 3.

Dans de tels modules optiques, c'est la forme du bord de coupure 9 qui détermine la forme de la ligne de coupure du faisceau élémentaire produit par le module optique considéré. Par exemple, en choisissant un bord de coupure du type de celui visible à la figure 3, où la plieuse comprend deux surfaces supérieures contenues dans des plans présentant un angle de 15°, on obtient une ligne de coupure permettant de réaliser la fonction de code européen classique. Pour obtenir une ligne de coupure en forme de "L",, le bord de coupure doit lui-même présenter une forme de "L", avec une première partie et une deuxième partie présentant entre elles un angle voisin de 90 degrés, plus généralement compris entre 45 degrés et 135 degrés.

Dans le cas d'un troisième module, destiné à former un faisceau élémentaire 101, la plieuse a une surface sans arrêtes, cette surface permettant la réalisation d'une coupure horizontale plate.

Sur les figures 5 et 6, on a représenté différentes combinaisons de faisceaux lumineux en trafic à droite susceptibles d'intervenir lors de différentes variantes de procédé selon l'invention.

Ainsi, en figure 5, une première variante 501 correspond à la combinaison des faisceaux mobiles présentés lors de la description de la figure 1. L'ensemble 517 des faisceaux élémentaires pouvant être générés par le dispositif d'éclairage de gauche est représenté à gauche et l'ensemble 527 des faisceaux élémentaires pouvant être généré par le dispositif d'éclairage de droite est représenté à droite sur la figure 5. Comme il a été vu précédemment, selon une variante de procédé les premiers faisceaux élémentaires 103 et 203 de deux dispositifs d'éclairage selon la présente invention peuvent être générés en même temps pour générer un faisceau code classique. Comme décrit en figure 1, les deuxièmes faisceaux élémentaires 105 et 205 peuvent être combinés pour générer un faisceau sélectif, en combinant éventuellement le premier faisceau élémentaire 203 du côté droit pour améliorer la portée du faisceau sélectif et ainsi lui conférer une progressivité.

Selon une deuxième variante 502, on propose de réaliser un dispositif projecteur gauche 503 équipé d'un premier module optique et d'un deuxième module optique, selon la terminologie précédemment employée, produisant un faisceau lumineux 505 de type code pour des conditions de circulation à gauche, et un faisceau lumineux 506 avec une ligne de coupure en "L", avec la partie horizontale à droite. De manière symétrique, on propose de réaliser un dispositif projecteur droit 504 équipé d'un premier module optique et d'un deuxième module optique, selon la terminologie précédemment employée, produisant respectivement un faisceau lumineux 507 de type code pour des conditions de circulation à droite, et un faisceau lumineux 508 avec une ligne de coupure en "L", avec la partie horizontale à gauche. Avec de tels faisceaux lumineux, on peut notamment réaliser un faisceau lumineux sélectif, dont l'intensité lumineuse est susceptible d'être renforcée, à droite comme à gauche d'une zone centrale non éclairée, par l'activation commandée et échelonnée des diodes équipant les deuxième modules optiques, réalisant les faisceaux de type code.

Selon une troisième variante, non représentée, le dispositif d'éclairage de gauche comprend trois modules d'éclairage générant des faisceaux élémentaires, respectivement tels que le faisceau 103, 105 et 505, et le dispositif d'éclairage de droite comprend trois modules d'éclairage générant des faisceaux élémentaires, respectivement tels que le faisceau 203, 508 et un faisceau identique au faisceau 505. On peut ainsi générer selon la réglementation du pays dans lequel circule le véhicule, un code pour trafic à gauche ou un code pour trafic à droite, ainsi qu'un faisceau sélectif tel que décrit précédemment, renforcé des deux côté de la zone d'ombre selon la portée souhaité.

## Revendications

1. Dispositif d'éclairage comportant un support (401) de module optique (403 ; 404) apte à évoluer en rotation autour d'un axe (402) sensiblement vertical, **caractérisé en ce que** le dispositif d'éclairage comprend:
- un premier module (403) optique apte à réaliser un faisceau lumineux présentant une coupure de type code ;
- un deuxième module (404) optique apte à générer un faisceau lumineux (105 ; 205) présentant une ligne de coupure (106 ; 206) sensiblement en forme de "L", avec une première partie sensiblement horizontale, qui s'interrompt par une remontée comprise entre 45 degrés et 135 degrés par rapport à la partie sensiblement horizontale de la ligne de coupure considérée, la partie horizontale de la ligne de coupure considérée s'étendant soit vers la droite, soit vers la gauche de ladite remontée;
le premier module optique (403) et le deuxième module optique (404) étant disposés sur le support (401) de module optique apte à évoluer en rotation.

2. Dispositif d'éclairage selon la revendication précédente **caractérisé en ce qu'**il comprend un troisième module optique apte à réaliser un faisceau lumineux (101 ; 201) à coupure plate (102 ; 202).

3. Dispositif d'éclairage selon l'une au moins des revendications précédentes **caractérisé en ce que** le premier module optique, le deuxième module optique et/ou le troisième module optique comprennent au moins une source lumineuse (5) de type diode électroluminescente.

4. Dispositif d'éclairage selon l'une au moins des revendications précédentes **caractérisé en ce que** le premier module optique comprend une unique diode électroluminescente.

5. Dispositif d'éclairage selon l'une au moins des revendications précédentes **caractérisé en ce que** le deuxième module optique comprend une unique diode électroluminescente.

6. Dispositif d'éclairage selon l'une au moins des revendications précédentes **caractérisé en ce qu'**il comprend un troisième module optique apte à réaliser un faisceau lumineux (101 ; 201) à coupure plate (102 ; 202) et comprenant une unique diode électroluminescente.

7. Dispositif d'éclairage selon l'une au moins des revendications 1 à 3 **caractérisé en ce qu'**il comprend un troisième module optique apte à réaliser un faisceau lumineux (101 ; 201) à coupure plate (102 ; 202) et comprenant au moins deux diodes électroluminescentes.

8. Ensemble de dispositifs d'éclairage constitué d'un premier dispositif d'éclairage et d'un deuxième dispositif d'éclairage, **caractérisé en ce que** le premier dispositif d'éclairage est un dispositif d'éclairage selon l'une au moins des revendications précédentes, et **en ce que** le deuxième dispositif d'éclairage est un deuxième dispositif d'éclairage selon l'une au moins des revendications précédentes, le deuxième module optique du premier dispositif d'éclairage présentant une ligne de coupure (106) sensiblement en forme de "L" dont la partie horizontale s'étend vers la droite, et le deuxième module optique du deuxième dispositif d'éclairage présentant une ligne de coupure (206) sensiblement en forme de "L" dont la partie horizontale s'étend vers la gauche.

9. Ensemble de dispositifs d'éclairage selon la revendication 8, **caractérisé en ce que** le premier dispositif d'éclairage est un premier projecteur pour véhicule automobile et le deuxième dispositif d'éclairage est un deuxième projecteur pour véhicule automobile.

10. Procédé d'adaptation automatique d'un faisceau lumineux produit par un ensemble de dispositifs d'éclairage selon l'une au moins des revendications 8 ou 9, d'un premier véhicule automobile circulant sur une route, ledit procédé comprenant les différentes étapes de :
- Détection de la présence d'au moins un deuxième véhicule, suivi ou croisé, à ne pas éblouir ;
- le cas échéant, détermination d'une position du deuxième véhicule sur la route ;
**caractérisé en ce que** le procédé comprend les différentes étapes supplémentaires consistant de :
- génération d'un faisceau lumineux sélectif (105; 205) au moyen du deuxième module optique du premier dispositif d'éclairage et du deuxième module optique du deuxième dispositif d'éclairage, le module optique du premier dispositif d'éclairage générant un faisceau lumineux (105) présentant une ligne de coupure (106) sensiblement en forme de "L", dont la partie horizontale s'étend vers la droite, et le module optique du deuxième dispositif d'éclairage générant un faisceau lumineux (205) présentant une ligne de coupure (206) sensiblement en forme de "L", dont la partie horizontale s'étend vers la gauche, de manière à ce que l'écart entre les deux remontées verticales des lignes de coupure de ces deux faisceaux lumineux crée une zone d'ombre (109) dans le faisceau sélectif;
- positionnement de la zone d'ombre au niveau de la position du deuxième véhicule.

11. Procédé d'adaptation automatique d'un faisceau lumineux selon la revendication 10, **caractérisé en ce qu'**il comprend une étape supplémentaire de superposition au faisceau lumineux sélectif un faisceau lumineux de type code, généré par le premier module optique du deuxième dispositif d'éclairage, sur une route de trafic à droite, ou du premier dispositif d'éclairage, sur une route de trafic à gauche.

12. Procédé d'adaptation automatique d'un faisceau lumineux selon la revendication 11, **caractérisé en ce que** le faisceau lumineux de type code est généré par une diode électroluminescente dont la valeur de l'intensité est déterminée par au moins un paramètre, ledit paramètre étant :
- une information de température dudit premier module optique et/ou du deuxième module optique ; et/ou
- une information de correction de portée.

13. Véhicule automobile **caractérisé en ce qu'**il comporte l'ensemble de dispositifs d'éclairage selon l'une au moins des revendications 8 à 9.

## Patentansprüche

1. Beleuchtungsvorrichtung, die einen Träger (401) eines optischen Moduls (403; 404) umfasst, der sich um eine im Wesentlichen vertikale Achse (402) rotatorisch bewegen kann, **dadurch gekennzeichnet, dass** die Beleuchtungsvorrichtung Folgendes umfasst:
- ein erstes optisches Modul (403), das ein Lichtstrahlenbündel bilden kann, das eine Kappung des Codetyps aufweist;
- ein zweites optisches Modul (404), das ein Lichtstrahlenbündel (105; 205) erzeugen kann, das eine Kappungslinie (106; 206) im Wesentlichen in Form eines "L" mit einem ersten im Wesentlichen horizontalen Teil, der durch eine Aufwärtslinie im Bereich von 45° bis 135° in Bezug auf den im Wesentlichen horizontalen Teil der betrachteten Kappungslinie unterbrochen ist, aufweist, wobei sich der horizontale Teil der betrachteten Kappungslinie in Bezug auf die Aufwärtslinie entweder nach rechts oder nach links erstreckt;
wobei das erste optische Modul (403) und das zweite optische Modul (404) auf dem Träger (401) für optisches Modul, der sich rotatorisch bewegen kann, angeordnet sind.

2. Beleuchtungsvorrichtung nach dem vorhergehenden Anspruch, **dadurch gekennzeichnet, dass** sie ein drittes optisches Modul umfasst, das ein Lichtstrahlenbündel (101; 201) mit flacher Kappung (102; 202) bilden kann.

3. Beleuchtungsvorrichtung nach wenigstens einem der vorhergehenden Ansprüche, **dadurch gekennzeichnet, dass** das erste optische Modul, das zweite optische Modul und/oder das dritte optische Modul wenigstens eine Lichtquelle (5) des Typs Leuchtdiode umfassen.

4. Beleuchtungsvorrichtung nach wenigstens einem der vorhergehenden Ansprüche, **dadurch gekennzeichnet, dass** das erste optische Modul eine einzige Leuchtdiode umfasst.

5. Beleuchtungsvorrichtung nach wenigstens einem der vorhergehenden Ansprüche, **dadurch gekennzeichnet, dass** das zweite optische Modul eine einzige Leuchtdiode umfasst.

6. Beleuchtungsvorrichtung nach wenigstens einem der vorhergehenden Ansprüche, **dadurch gekennzeichnet, dass** sie ein drittes optisches Modul umfasst, das ein Lichtstrahlenbündel (101; 201) mit flacher Kappung (102; 202) bilden kann und eine einzige Leuchtdiode umfasst.

7. Beleuchtungsvorrichtung nach wenigstens einem der Ansprüche 1 bis 3, **dadurch gekennzeichnet, dass** sie ein drittes optisches Modul umfasst, das ein Lichtstrahlenbündel (101; 201) mit flacher Kappung (102; 202) bilden kann und wenigstens zwei Leuchtdioden umfasst.

8. Anordnung von Beleuchtungsvorrichtungen, die aus einer ersten Beleuchtungsvorrichtung und einer zweiten Beleuchtungsvorrichtung gebildet ist, **dadurch gekennzeichnet, dass** die erste Beleuchtungsvorrichtung eine Beleuchtungsvorrichtung nach wenigstens einem der vorhergehenden Ansprüche ist und dass die zweite Beleuchtungsvorrichtung eine zweite Beleuchtungsvorrichtung nach wenigstens einem der vorhergehenden Ansprüche ist, wobei das zweite optische Modul der ersten Beleuchtungsvorrichtung eine Kappungslinie (106) im Wesentlichen in Form eines "L" aufweist, dessen horizontaler Teil sich nach rechts erstreckt, und das zweite optische Modul der zweiten Beleuchtungsvorrichtung eine Kappungslinie (206) im Wesentlichen in Form eines "L" aufweist, dessen horizontaler Teil sich nach links erstreckt.

9. Anordnung von Beleuchtungsvorrichtungen nach Anspruch 8, **dadurch gekennzeichnet, dass** die erste Beleuchtungsvorrichtung ein erster Kraftfahrzeugscheinwerfer ist und die zweite Beleuchtungsvorrichtung ein zweiter Kraftfahrzeugscheinwerfer ist.

10. Verfahren zum automatischen Anpassen eines Lichtstrahlenbündels, das durch eine Anordnung von Beleuchtungsvorrichtungen nach wenigstens einem der Ansprüche 8 oder 9 erzeugt wird, eines ersten Kraftfahrzeugs, das auf einer Straße fährt, wobei das Verfahren die folgenden verschiedenen Schritte umfasst:
- Detektieren des Vorhandenseins wenigstens eines zweiten Fahrzeugs, dem gefolgt wird oder das kreuzt und das nicht geblendet werden soll;
- gegebenenfalls Bestimmen einer Position des zweiten Fahrzeugs auf der Straße;
**dadurch gekennzeichnet, dass** das Verfahren die folgenden zusätzlichen unterschiedlichen Schritte umfasst, die darin bestehen:
- ein selektives Lichtstrahlenbündel (105; 205) mittels des zweiten optischen Moduls der ersten Beleuchtungsvorrichtung und des zweiten optischen Moduls der zweiten Beleuchtungsvorrichtung zu erzeugen, wobei das optische Modul der ersten Beleuchtungsvorrichtung ein Lichtstrahlenbündel (105) erzeugt, das eine Kappungslinie (106) im Wesentlichen in Form eines "L" aufweist, dessen horizontaler Teil sich nach rechts erstreckt, und das optische Modul der zweiten Beleuchtungsvorrichtung ein Lichtstrahlenbündel (205) erzeugt, das eine Kappungslinie (206) im Wesentlichen in Form eines "L" aufweist, dessen horizontaler Teil sich nach links erstreckt, derart, dass der Abstand zwischen den beiden vertikalen Aufwärtslinien der Kappungslinien dieser beiden Lichtstrahlenbündel in dem selektiven Strahlenbündel eine Schattenzone (109) erzeugt;
- die Schattenzone auf Höhe der Position des zweiten Fahrzeugs zu positionieren.

11. Verfahren zum automatischen Anpassen eines Lichtstrahlenbündels nach Anspruch 10, **dadurch gekennzeichnet, dass** es einen zusätzlichen Schritt des Überlagerns des selektiven Lichtstrahlenbündels mit einem Lichtstrahlenbündel des Codetyps, das durch das erste optische Modul der zweiten Beleuchtungsvorrichtung auf einer Straße mit Rechtsverkehr oder der ersten Beleuchtungsvorrichtung auf einer Straße mit Linksverkehr erzeugt wird, umfasst.

12. Verfahren zum automatischen Anpassen eines Lichtstrahlenbündels nach Anspruch 11, **dadurch gekennzeichnet, dass** das Lichtstrahlenbündel des Codetyps durch eine Leuchtdiode erzeugt wird, deren Intensitätswert durch wenigstens einen Parameter bestimmt wird, wobei der Parameter gegeben ist durch:
- Informationen über die Temperatur des ersten optischen Moduls und/oder des zweiten optischen Moduls; und/oder
- Informationen über die Reichweitenkorrektur.

13. Kraftfahrzeug, **dadurch gekennzeichnet, dass** es die Anordnung von Beleuchtungsvorrichtungen nach wenigstens einem der Ansprüche 8 bis 9 umfasst.

## Claims

1. Lighting device comprising a support (401) for an optical module (403; 404) capable of moving in rotation about a substantially vertical axis (402), **characterized in that** the lighting device comprises:
- a first optical module (403) capable of producing a light beam having a cutoff of low beam type;
- a second optical module (404) capable of generating a light beam (105; 205) having a substantially "L" shaped cutoff line (106; 206), with a first substantially horizontal part, which is interrupted by a rise of between 45° and 135° relative to the substantially horizontal part of the cutoff line considered, the horizontal part of the cutoff line considered extending either to the right, or the left of said rise;
the first optical module (403) and the second optical module (404) being arranged on the optical module support (401) capable of moving in rotation.

2. Lighting device according to the preceding claim, **characterized in that** it comprises a third optical module capable of producing a light beam (101; 201) with flat cutoff (102; 202).

3. Lighting device according to at least one of the preceding claims, **characterized in that** the first optical module, the second optical module and/or the third optical module comprise at least one light source (5) of light-emitting diode type.

4. Lighting device according to at least one of the preceding claims, **characterized in that** the first optical module comprises a single light-emitting diode.

5. Lighting device according to at least one of the preceding claims, **characterized in that** the second optical module comprises a single light-emitting diode.

6. Lighting device according to at least one of the preceding claims, **characterized in that** it comprises a third optical module capable of producing a light beam (101; 201) with flat cutoff (102; 202) and comprising a single light-emitting diode.

7. Lighting device according to at least one of Claims 1 to 3, **characterized in that** it comprises a third optical module capable of producing a light beam (101; 201) with flat cutoff (102; 202) and comprising at least two light-emitting diodes.

8. Set of lighting devices consisting of a first lighting device and of a second lighting device, **characterized in that** the first lighting device is a lighting device according to at least one of the preceding claims, and **in that** the second lighting device is a second lighting device according to at least one of the preceding claims, the second optical module of the first lighting device having a substantially "L" shaped cutoff line (106) of which the horizontal part extends to the right, and the second optical module of the second lighting device having a substantially "L" shaped cutoff line (206) of which the horizontal part extends to the left.

9. Set of lighting devices according to Claim 8, **characterized in that** the first lighting device is a first headlight for a motor vehicle and the second lighting device is a second headlight for a motor vehicle.

10. Method for automatically adapting a light beam produced by a set of lighting devices according to at least one of Claims 8 or 9, of a first motor vehicle travelling on a road, said method comprising the various steps of:
- detecting the presence of at least one second vehicle, following or oncoming, to not be dazzled;
- if necessary, determining a position of the second vehicle on the road;
**characterized in that** the method comprises various additional steps consisting in:
- generating a selective light beam (105; 205) by means of the second optical module of the first lighting device and of the second optical module of the second lighting device, the optical module of the first lighting device generating a light beam (105) having a substantially "L" shaped cutoff line (106), of which the horizontal part extends to the right, and the optical module of the second lighting device generating a light beam (205) having a substantially "L" shaped cutoff line (206), of which the horizontal part extends to the left, so that the separation between the two vertical rises of the cutoff lines of these two light beams creates a shadow zone (109) in the selective beam;
- positioning the shadow zone at the position of the second vehicle.

11. Method for automatically adapting a light beam according to Claim 10, **characterized in that** it comprises an additional step of superimposing, on the selective light beam, a light beam of low beam type, generated by the first optical module of the second lighting device, on a road with traffic driving on the right, or of the second lighting device, on a road with traffic driving on the left.

12. Method for automatically adapting a light beam according to Claim 11, **characterized in that** the light beam of low beam type is generated by a light-emitting diode whose intensity value is determined by at least one parameter, said parameter being:
- information of temperature of said first optical module and/or of the second optical module; and/or
- range correction information.

13. Motor vehicle, **characterized in that** it comprises the set of lighting devices according to at least one of Claims 8 and 9.
